# EUROPÄISCHE PATENTANMELDUNG

(11) **EP 4 386 433 A1**
(43) Veröffentlichungstag der Anmeldung: **19.06.2024**
(21) Anmeldenummer: 23211687.1
(22) Anmeldetag: 23.11.2023
(51) Int. Cl.: G01S 7/481, G01S 7/497, G01S 17/931

(54) **LASERSCANNER ZUR ÜBERWACHUNG EINES RAUMBEREICHS UND AUTONOM FAHRENDES FAHRZEUG MIT EINEM SOLCHEN LASERSCANNER UND VERFAHREN ZUM BETRIEB EINES SOLCHEN LASERSCANNERS**

(30) Priorität: 13.12.2022 DE 102022133129
(71) Anmelder: SICK AG, 79183 Waldkirch (DE)
(72) Erfinder: VIOHL, Jan, 22946 Großensee (DE)
(74) Vertreter: Manitz Finsterwald Patent- und Rechtsanwaltspartnerschaft mbB

(57) **Zusammenfassung**

Ein Laserscanner (1) mit einer Steuer- und Verarbeitungsvorrichtung (2), einer Lasermesseinheit (3), einer Nullpunktdetektionseinheit (11), einem stationären Teil (12) und einem drehbaren Teil (13). Die Lasermesseinheit (3) ist dazu ausgebildet, um ein Lasersignal (6) zu erzeugen und um ein Reflektionssignal (7) zu empfangen um daraus Messdaten zu generieren. Der drehbare Teil (13) ist dazu ausgebildet, damit das Lasersignal (6) in unterschiedlichen Winkellagen von dem Laserscanner (1) abstrahlbar ist. Die Messdaten sind über eine erste Signalübertragungsstrecke (10a) übertragbar. Die Nullpunktdetektionseinheit (11) ist dazu ausgebildet ist, um ein elektromagnetisches Signal (17) zu erzeugen und über eine zweite Signalübertragungsstrecke (10b) zwischen dem drehbaren und stationären Teil (13, 12) zu übertragen und um anhand des übertragenen elektromagnetischen Signals (17) eine Nullpunktlageinformation (18) zu erzeugen, aus der ermittelbar ist, wann sich der drehbare Teil (13) um 360° um seine Drehachse (14) gedreht hat. Die erste Signalübertragungsstrecke (10a) und die zweite Signalübertragungsstrecke (10b) ist räumlich beabstandet.

## Beschreibung

Die Erfindung betrifft einen Laserscanner zur Überwachung eines Raumbereichs und ein autonom fahrendes Fahrzeug mit einem solchen Laserscanner und ein Verfahren zum Betrieb eines solchen Laserscanners.

Zur Überwachung eines Raumbereichs, insbesondere zur Hinderniserkennung von autonom fahrenden Fahrzeugen, werden Laserscanner eigesetzt. Hindernisse werden dabei über ein ausgesendetes Lasersignal und den entsprechenden Reflexionen erkannt. Das Lasersignal wird dabei über eine Winkellage von 360° um den Laserscanner ausgesendet. Dies gelingt beispielsweise durch Drehung einer entsprechenden Ablenkeinheit für das Lasersignal mittels eines Motors. Die Daten des Laserscanners werden dabei mehr oder weniger stark zeitlich verzögert ausgegeben. Dies rührt daher, dass im Normalfall die Steuerung der Einzelmessungen des Laserscanners, sowie die Messwertverarbeitung und Datenübertragung durch einen oder sogar mehrere Prozessoren ausgeführt wird. Dies erzeugt beträchtliche Durchlaufzeiten, die zusätzlich je nach Auslastung des zumindest einen Prozessors noch stark variabel sind. Die erzeugten Verzögerungen sind typischerweise im Bereich von mehreren Millisekunden. Bei einer Scanrate des Laserscanners von 25 Hz entsprechen jedoch 40 ms schon der Dauer eines vollständigen Scans (0° bis 360°), sodass ein um mehrere Millisekunden verzögertes Ausgangssignal die weitere Verarbeitung negativ beeinflussen kann.

Es ist daher die Aufgabe der hier vorliegenden Erfindung einen Laserscanner zu schaffen, bei dem trotz entsprechender Durchlaufzeiten die Messergebnisse optimal weiterverwendet werden können.

Die Aufgabe wird durch den Laserscanner gemäß dem Anspruch 1, sowie durch ein autonom fahrendes Fahrzeug gemäß dem Anspruch 15 und durch das Verfahren zum Betrieb eines solchen Laserscanners gemäß dem Anspruch 16 gelöst. Die Ansprüche 2 bis 14 beschreiben vorteilhafte Weiterbildungen des Laserscanners.

Der erfindungsgemäße Laserscanner dient zur Überwachung eines Raumbereichs, insbesondere zur Erkennung von Hindernissen bei einem autonom fahrenden Fahrzeug. Der Laserscanner umfasst eine Steuer- und Verarbeitungsvorrichtung, eine Lasermesseinheit, eine Nullpunktdetektionseinheit, einen stationären Teil und einen sich gegenüber dem stationären Teil drehbaren Teil. Die Lasermesseinheit ist dazu ausgebildet, um ein Lasersignal zur Detektion eines Objekts zu erzeugen und um ein Reflektionssignal von dem Objekt zu empfangen, um daraus Messdaten zu generieren, wobei die Messdaten beispielsweise Abstandswerte des Objekts umfassen können. Der drehbare Teil ist dazu ausgebildet, damit das Lasersignal in unterschiedlichen Winkellagen von dem Laserscanner abstrahlbar ist. Die Messdaten sind dabei über eine erste Signalübertragungsstrecke insbesondere zu der Steuer- und Verarbeitungsvorrichtung übertragbar. Die Nullpunktdetektionseinheit ist dazu ausgebildet, um ein elektro- und/oder magnetisches Signal zu erzeugen und über eine zweite Signalübertragungsstrecke zwischen dem sich drehbaren Teil und dem stationären Teil zu übertragen. Die Nullpunktdetektionseinheit ist weiter dazu ausgebildet, um anhand des übertragenen elektro- und/oder magnetischen Signals eine Nullpunktlageinformation zu erzeugen, aus der ermittelbar ist, wann sich der drehbare Teil um 360° um seine Drehachse gedreht hat. Die erste Signalübertragungsstrecke und die zweite Signalübertragungsstrecke sind dabei räumlich voneinander beabstandet.

Es ist besonders vorteilhaft, dass das Lasersignal in unterschiedlichen Winkellagen von dem Laserscanner abstrahlbar ist, weil dadurch Objekte, die sich in unterschiedlichen Positionen um den Laserscanner herum befinden, detektierbar sind. Es ist weiterhin besonders vorteilhaft, dass eine Nullpunktdetektionseinheit verwendet wird, mit welcher die Nullpunktlageinformation erzeugbar ist. Diese Nullpunktlageinformation beinhaltet eine Information, aus der ableitbar ist, dass sich der drehbare Teil um 360° um seine Drehachse gedreht hat. Im einfachsten Fall gibt die Nullpunktlageinformation alle 360°, also bei einer vollständigen Umdrehung, eine Nullpunktlageinformation aus. Grundsätzlich wäre es allerdings auch denkbar, dass die Nullpunktdetektionseinheit bei einer Drehung des drehbaren Teils um seine Drehachse von z.B. 90° oder 180° eine entsprechende Nullpunktlageinformation ausgibt, wobei aus diesen Informationen ebenfalls auf eine 360° Drehung (nach Erhalt von vier solcher Nullpunktlageinformationen bzw. nach Erhalt von zwei solcher Nullpunktlageinformationen) geschlossen werden kann. Anhand dieser Nullpunktlageinformation ist es möglich, die Messdaten, die die Lasermesseinheit erzeugt und ausgibt, in einem exakten zeitlichen Kontext darzustellen. Enthalten die Messdaten der Lasermesseinheit neben entsprechenden Distanzinformationen eines Objekts noch Winkelinformationen, in welchem Winkel dieses Objekt erfasst wurde, so können diese Winkelinformationen in einen zeitlichen Kontext dargestellt werden, weil die 0°-Lage durch die entsprechende Nullpunktlageinformation zeitlich bekannt ist. So kann die Nullpunktlageinformation auch als Trigger-Signal angesehen werden, wobei die Steuer- und Verarbeitungsvorrichtung des Laserscanners bzw. eine Verarbeitungseinrichtung eines autonom fahrenden Fahrzeugs die entsprechenden Messdaten zusammen mit der Nullpunktlageinformation synchronisieren kann. Werden Distanzinformationen zusammen mit einer Winkelinformation von 0° zeitlich versetzt nach der Nullpunktlageinformation übertragen, so kann die Distanzinformation in den richtigen zeitlichen Kontext (wann exakt wurde die Distanzinformation gewonnen) transformiert (synchronisiert) werden. Es ist hierbei besonders vorteilhaft, dass die erste und die zweite Signalübertragungsstrecke räumlich voneinander beabstandet sind, also dass zwei getrennte Signalübertragungsstrecken verwendet werden. So ist die Latenz der zweiten Übertragungsstrecke vorzugsweise niedriger und insbesondere konstant(er) gegenüber der Latenz der ersten Übertragungsstrecke. Zeitliche Schwankungen in der Verarbeitung der Messdaten wirken sich nicht auf die Übertragungszeit der Nullpunktlageinformation aus. Untersuchungen haben ergeben, dass eine solche Nullpunktlageinformation in weniger als 2 µs nach dem 0 °-Durchgang an einer entsprechenden Verarbeitungseinrichtung (zum Beispiel an der Steuer- und Verarbeitungsvorrichtung) anliegen kann. Hat der Laserscanner eine 25 Hz Scanfrequenz, so bedeutet dies, dass die Nullpunktlageinformation innerhalb von 18m° vorliegt. Durch diese sehr geringe Verzögerungszeit ist das Messsignal, welches auf die Nullpunktlageinformation synchronisiert werden kann, sehr gut für weitere Anwendungen nutzbar.

Steuer- und Verarbeitungsvorrichtung des Laserscanners kann beispielsweise als FPGA ausgebildet sein.

In einer vorteilhaften Ausführungsform sind die erste Signalübertragungsstrecke und die zweite Signalübertragungsstrecke über ihre jeweilige gesamte Länge jeweils vollständig räumlich getrennt zueinander geführt.

In einer vorteilhaften Ausführungsform dreht sich der drehbare Teil fortlaufend um 360° um seine Drehachse herum.

In einer vorteilhaften Ausführungsform ist die Nullpunktdetektionseinheit dazu ausgebildet, um die Nullpunktlageinformation an die Steuer- und Verarbeitungsvorrichtung zu übertragen. Ergänzend oder alternativ kann die Nullpunktdetektionseinheit auch dazu ausgebildet sein, um die Nullpunktlageinformation an einem Ausgangsanschluss des Laserscanners bereitzustellen. In diesem Fall kann eine andere Vorrichtung als die Steuer- und Verarbeitungsvorrichtung die Synchronisierung der Messergebnisse anhand der Nullpunktlageinformation vornehmen. Dieser Ausgang kann auch als Trigger-Ausgang bezeichnet werden.

In einer vorteilhaften Ausführungsform ist das elektromagnetische Signal ein Laserlicht oder ein Lichtpuls, insbesondere von einem Laser oder einer LED.

In einer vorteilhaften Ausführungsform umfasst der drehbare Teil eine erste Seite, die in Richtung einer Seite des stationären Teils gerichtet ist, wobei der Lichtpuls senkrecht oder mit einer Komponente überwiegend senkrecht zur ersten Seite ausgesendet wird.

In einer vorteilhaften Ausführungsform umfasst die Nullpunktdetektionseinheit eine Sendeeinheit und eine Empfangseinheit. Die Sendeeinheit ist dazu ausgebildet, um das elektromagnetische Signal zu erzeugen und auszusenden, wobei die Empfangseinheit dazu ausgebildet ist, um das elektromagnetische Signal zu empfangen. Die Nullpunktdetektionseinheit ist dazu ausgebildet, die Nullpunktlageinformation zu erzeugen, wenn die Empfangseinheit das elektromagnetische Signal empfängt.

In einer vorteilhaften Ausführungsform ist die Sendeeinheit der Nullpunktdetektionseinheit eine zur Laserquelle der Lasermesseinheit separate Einheit. Ergänzend oder alternativ ist die Empfangseinheit der Nullpunktdetektionseinheit eine zum Laserempfänger der Lasermesseinheit separate Einheit. Es handelt sich dabei nicht um dieselben Elemente.

In einer vorteilhaften Ausführungsform ist die Laserquelle der Lasermesseinheit pro Umdrehung des sich drehenden Teils länger eingeschaltet als die Sendeeinheit der Nullpunktdetektionseinheit.

In einer vorteilhaften Ausführungsform ist die Lasermesseinheit des Laserscanners dazu ausgebildet, um ein Lasersignal zur Detektion des Objekts in einer Entfernung zum Laserscanner zu erzeugen und auszusenden, wobei das Lasersignal in einem Winkelbereich von 360° nach außerhalb des Laserscanners aussendbar ist.

In einer vorteilhaften Ausführungsform handelt es sich bei der Sendeeinheit um eine Laserdiode und bei der Empfangseinheit um eine Fotodiode. Grundsätzlich kann die Sendeeinheit und/oder die Empfangseinheit noch eine Fokussieroptik umfassen.

In einer vorteilhaften Ausführungsform ist die Sendeeinheit auf dem sich drehbaren Teil angeordnet und die Empfangseinheit auf dem stationären Teil. Die zweite Signalübertragungsstrecke ist daher der Weg zwischen dem sich drehbaren Teil und dem stationären Teil. Die Distanz zwischen dem sich drehbaren Teil und dem stationären Teil ist vorzugsweise kleiner als 30mm, 20mm, 10 mm, 5mm oder kleiner als 3mm.

In einer vorteilhaften Ausführungsform umfasst der drehbare Teil eine erste Seite und eine zweite Seite. Die erste Seite liegt gegenüber der zweiten Seite. Die erste Seite zeigt in Richtung des stationären Teils, wobei die Sendeeinheit auf der ersten Seite oder der zweiten Seite des drehbaren Teils angeordnet ist.

In einer vorteilhaften Ausführungsform umfasst der drehbare Teil eine durchgehende Öffnung, die die erste Seite mit der zweiten Seite verbindet. Die Sendeeinheit ist auf der zweiten Seite angeordnet und dazu ausgebildet, um das elektromagnetische Signal durch die durchgehende Öffnung in Richtung des stationären Teils zu übertragen. Durch die durchgehende Öffnung wird das elektromagnetische Signal, in Form von Laserlicht, noch gebündelt. Gleichzeitig kann der Abstand zwischen dem drehbaren Teil und dem stationären Teil minimal gehalten werden, weil die Sendeeinheit auf der zweiten Seite des drehbaren Teils angeordnet ist.

In einer vorteilhaften Ausführungsform ist die Sendeeinheit dazu ausgebildet, um das elektromagnetische Signal dann zu erzeugen, wenn sich der drehbare Teil um 360° gegenüber dem stationären Teil gedreht hat.

In einer vorteilhaften Ausführungsform sind die Sendeeinheit und die Empfangseinheit zur Übertragung des elektromagnetischen Signals bei Erreichen einer Nullpunktlage in Draufsicht auf den sich drehbaren Teil zumindest teilweise oder vollständig überlappend zueinander angeordnet. Dadurch kann das elektromagnetische Signal, insbesondere in Form von Laserlicht, besonders effizient von der Sendeeinheit in Richtung der Empfangseinheit übertragen werden.

In einer vorteilhaften Ausführungsform umfasst der Laserscanner eine Winkelmesseinheit. Die Winkelmesseinheit ist dazu ausgebildet, um einen Abstrahlwinkel (zum Beispiel 0° bis 360°) als Winkelinformation auszugeben, in welchem das Lasersignal zur Detektion von Hindernissen gerade ausgesendet wird. Diese Winkelinformation steht insbesondere im Zusammenhang mit einer Nullpunktlage. Die Nullpunktdetektionseinheit ist dazu ausgebildet, um die Winkelinformation von der Winkelmesseinheit zu empfangen. Die Sendeeinheit ist nach Empfang dieser Winkelinformation, insbesondere nach Empfang einer Nullpunktlage innerhalb der Winkelinformation, dazu ausgebildet, um das elektromagnetische Signal zu erzeugen. Die Nullpunktlage gibt, wie bereits erläutert an, dass sich der drehbare Teil um eine Umdrehung gegenüber seiner Drehachse gedreht hat. In diesem Zusammenhang wäre es auch denkbar, dass die Winkelmesseinheit lediglich dann eine Winkelinformation an die Nullpunktdetektionseinheit ausgibt, wenn die Nullpunktlage erreicht wird. In diesem Fall wäre die Nullpunktdetektionseinheit dazu ausgebildet, um jedes Mal bei Erhalt einer Winkelinformation das elektromagnetische Signal, also das Laserlicht, für eine bestimmte Zeitdauer zu erzeugen. Das Laserlicht würde in diesem Fall gepulst werden. Die Zeitdauer ist kleiner als die Zeit, die es benötigt, bis sich der drehbare Teil einmal um seine eigene Drehachse gedreht hat.

In einer vorteilhaften Ausführungsform ist die Sendeeinheit dazu ausgebildet, um das elektromagnetische Signal zeitlich derart früh auszusenden, dass die Nullpunktlageinformation zumindest zu dem Zeitpunkt an der Steuer- und Verarbeitungseinrichtung und/oder an einem Ausgangsanschluss des Laserscanners eintrifft, an dem sich der drehbare Teil vorzugsweise exakt um 360° um seine Drehachse gedreht hat. Dies bedeutet, dass das elektromagnetische Signal durch die Sendeeinheit erzeugt und ausgesendet wird bevor sich der drehbare Teil um 360° um seine Drehachse gedreht hat. Dabei wird die Zeit berücksichtigt, die es benötigt, um das elektromagnetische Signal zu erzeugen und um aus dem elektromagnetischen Signal wieder ein elektrisches Signal an der Empfangseinheit zu generieren. Es ist auch möglich, dass noch weitere Verarbeitungszeiten einkalkuliert werden.

In einer vorteilhaften Ausführungsform sind die Sendeeinheit und die Empfangseinheit im stationären Teil angeordnet. Der drehbare Teil umfasst eine erste Seite, wobei die erste Seite in Richtung des stationären Teils zeigt. Die erste Seite umfasst an dem Bereich, in welchem der drehbare Teil eine 360° Drehung um seine Drehachse abgeschlossen hat, eine Markierungsinformation, die dazu ausgebildet ist, um das von der Sendeeinheit ausgesendete elektromagnetische Signal gegenüber Bereichen auf der ersten Seite ohne eine solche Markierungsinformation (insbesondere die restlichen Bereiche) mit einer anderen Reflektivität oder zeitlich verzögert in Richtung der Empfangseinheit zu reflektieren. So kann die Markierungsinformation eine Durchgangsöffnung umfassen, die den drehbaren Teil durchsetzt, durch welche das elektromagnetische Signal (Laserlicht) gerade eben nicht reflektiert wird. Das elektromagnetische Signal kann in diesem Fall dauerhaft oder gepulst ausgesendet werden. Die Markierungsinformation kann auch aus einer Schicht hoher oder niedriger Reflektivität bestehen, wodurch das elektromagnetische Signal (Laserlicht) anders reflektiert wird als an denjenigen Bereichen, bei denen der drehbare Teil keine 360° Drehung um seine Drehachse abgeschlossen hat. Das elektromagnetische Signal kann in diesem Fall dauerhaft oder gepulst ausgesendet werden. Es ist auch möglich, dass die Markierungsinformation eine Einbuchtung auf der ersten Seite des drehbaren Teils umfasst, wodurch die Lichtlaufzeit des elektromagnetischen Signals (Laserlicht) erhöht wird. In diesem Fall wird das elektromagnetische Signal insbesondere gepulst ausgesendet, wobei die Reflexion eines Pulses durch die Einbuchtung länger dauert als die Reflexion der übrigen Pulse an denjenigen Stellen ohne die genannte Markierungsinformation.

In einer vorteilhaften Ausführungsform ist die Steuer- und Verarbeitungsvorrichtung dazu ausgebildet, um die Messdaten mittelbar oder unmittelbar von der Lasermesseinheit zu empfangen und zumindest in Teilen mit der Nullpunktlageinformation zu verknüpfen. Unter einem "unmittelbaren" Empfang ist zu verstehen, dass die Steuer- und Verarbeitungsvorrichtung direkt mit der Lasermesseinheit verbunden ist. Dies kann über eine elektrische oder eine optische Verbindung erfolgen. Unter einem "mittelbaren" Empfang ist zu verstehen, dass Steuer- und Verarbeitungsvorrichtung über weitere Bauelemente, wie beispielsweise einen Verstärker (z.B. Leitungstreiber) oder eine Signalaufbereitungseinrichtung, mit der Lasermesseinheit verbunden ist. Ein "Verknüpfen" kann z.B. eine mathematische Operation umfassen oder z.B. auch das zeitliche Einordnen der Messdaten anhand der Nullpunktlageinformation.

In einer vorteilhaften Ausführungsform ist die Lasermesseinheit auf dem stationären Teil angeordnet, wobei der Laserscanner weiterhin eine Ablenkeinheit aufweist, die auf dem drehbaren Teil angeordnet und dazu ausgebildet ist, um das Lasersignal in die unterschiedlichen Winkellagen abzustrahlen und um ein Reflektionssignal an die Lasermesseinheit weiterzuleiten. Alternativ könnte die Lasermesseinheit auch direkt auf dem drehbaren Teil angeordnet sein.

In einer vorteilhaften Ausführungsform ist die zweite Signalübertragungsstrecke näher am äußeren Endbereich des drehbaren Teils angeordnet als an der Drehachse des drehbaren Teils. Dadurch ist die Winkelauflösung höher.

Die Erfindung betrifft auch ein autonom fahrendes Fahrzeug. Das oben bereits erwähnte autonom fahrende Fahrzeug ist insbesondere ein Stapler. Das autonom fahrende Fahrzeug umfasst zumindest einen Laserscanner wie er vorstehend beschrieben ist. Über den Laserscanner bezieht das autonom fahrende Fahrzeug Informationen über dessen Umgebung, um so kollisionsfrei von einem Punkt zu einem anderen Punkt navigieren zu können. Das autonom fahrende Fahrzeug ist hierin stellvertretend für einen möglichen Einsatzbereich des Laserscanners genannt. Es versteht sich, dass der Laserscanner auch für weitere/andere Zwecke eingesetzt werden kann.

Das erfindungsgemäße Verfahren dient zum Betrieb eines Laserscanners, der eine Steuer- und Verarbeitungseinrichtung, eine Lasermesseinheit, eine Nullpunktdetektionseinheit, einen stationären Teil und einen sich gegenüber dem stationären Teil drehbaren Teil umfasst. In einem ersten Verfahrensschritt erfolgt ein fortlaufendes Drehen des drehbaren Teils um eine Drehachse. Diese Drehung erfolgt vorzugsweise immer in dieselbe Drehrichtung, wobei die Drehgeschwindigkeit vorzugsweise konstant ist. In einem zweiten Verfahrensschritt wird ein Lasersignal vom drehbaren Teil je nach aktuellem Drehwinkel in unterschiedlichen Winkellagen ausgesendet und ein Reflektionssignal empfangen, um anhand des Reflektionssignals Messdaten zu generieren. In einem dritten Verfahrensschritt werden diese Messdaten über eine erste Signalübertragungsstrecke insbesondere zu der Steuer- und Verarbeitungsvorrichtung übertragen. In einem vierten Verfahrensschritt wird ein elektromagnetisches Signal erzeugt und zwischen dem drehbaren Teil und dem stationären Teil über eine zweite Signalübertragungsstrecke übertragen, wobei die zweite Signalübertragungsstrecke räumlich von der ersten Signalübertragungsstrecke getrennt ist. In einem fünften Verfahrensschritt wird eine Nullpunktlageinformation anhand des übertragenen elektromagnetischen Signals erzeugt, wobei aus dieser Nullpunktlageinformation ermittelbar ist, wann sich der drehbare Teil um 360° um seine Drehachse gedreht hat.

Nachfolgend wird die Erfindung rein beispielhaft unter Bezugnahme auf die Zeichnungen beschrieben. Es zeigen:
- Figur 1:: ein Ausführungsbeispiel eines Laserscanners mit einer Nullpunktdetektionseinheit einer Lasermesseinheit, einem stationären Teil und einem drehbaren Teil, wobei die Lasermesseinheit auf dem drehbaren Teil angeordnet ist;
- Figuren 2, 3, 4:: Ausführungsbeispiele des Laserscanners, wobei die Lasermesseinheit auf dem stationären Teil angeordnet ist und wobei die Nullpunktdetektionseinheit unterschiedlich aufgebaut ist;
- Figur 5:: eine Draufsicht auf ein Ausführungsbeispiel des drehbaren Teils aus den Figuren 1 und 2;
- Figur 6:: ein Ausführungsbeispiel, welches erläutert, wie aus dem elektromagnetischen Signal eine Nullpunktlageinformation erzeugt wird;
- Figur 7:: ein Ausführungsbeispiel, welches erläutert, dass das elektromagnetische Signal bereits vor Erreichen der Nullpunktlage des drehbaren Teils erzeugt wird;
- Figur 8:: ein Ausführungsbeispiel eines autonom fahrenden Fahrzeugs, in Form eines Staplers, welches den erfindungsgemäßen Laserscanner umfasst; und
- Figur 9:: ein Flussdiagramm, welches ein Verfahren zum Betrieb des erfindungsgemäßen Laserscanners beschreibt.

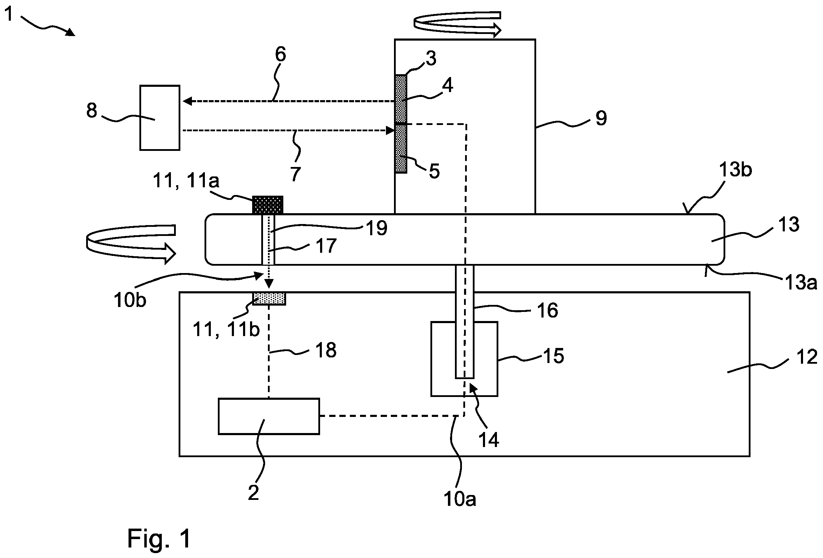

Figur 1 zeigt ein Ausführungsbeispiel des erfindungsgemäßen Laserscanners 1, der zur Überwachung eines Raumbereichs, insbesondere um ein autonom fahrendes Fahrzeug 100 herum, dient. Der Laserscanner 1 umfasst eine Steuer- und Verarbeitungsvorrichtung 2. Bei der Steuer- und Verarbeitungsvorrichtung 2 kann es sich beispielsweise um einen Prozessor und/oder einen Mikrocontroller und/oder einen FPGA handeln. Die Steuer- und Verarbeitungsvorrichtung 2 kann eine Speichereinheit (nicht dargestellt) aufweisen, die integraler Bestandteil der Steuer- und Verarbeitungsvorrichtung 2 ist und/oder mit der Steuer- und Verarbeitungsvorrichtung 2 verbunden ist.

Der Laserscanner 1 umfasst außerdem eine Lasermesseinheit 3, die eine Laserquelle 4 und einen Laserempfänger 5 umfasst. Die Lasermesseinheit 3 ist dazu ausgebildet, um ein Lasersignal 6 mit der Laserquelle 4 zu erzeugen und auszusenden und ein Reflektionssignal 7 von einem Objekt 8 mit dem Laserempfänger 5 zu empfangen. Die Lasermesseinheit 3 kann durch ein Gehäuse 9 abgedeckt sein, wobei das Gehäuse zumindest eine Öffnung und/oder transparente Eigenschaften für das Lasersignal 6 und das Reflektionssignal 7 aufweist. Die Lasermesseinheit 3 ist dazu ausgebildet, um anhand des Reflektionssignals 7 Messdaten zu generieren. Diese Messdaten können beispielsweise an die Steuer- und Verarbeitungsvorrichtung 2 übertragen werden. Diese ist über eine gestrichelte Verbindung dargestellt, bei welcher es sich um eine erste Signalübertragungsstrecke 10a handelt. Die erste Signalübertragungsstrecke 10a kann eine Glasfaserleitung, eine Funkübertragungsstrecke (kapazitiv oder induktiv) oder eine elektrische Leitung sein. Es ist auch denkbar, dass die Messdaten an einem Daten-Ausgangsanschluss des Laserscanners 1 bereitgestellt werden. Bei den Messdaten handelt es sich bevorzugt um einen digitalen Datenstrom. Der Laserscanner 1 ist auch dazu ausgebildet, um das Lasersignal 6 in einem Winkelbereich von 360° um den Laserscanner herum auszusenden. Dadurch können Objekte sowohl vorne, hinten, links und rechts am Laserscanner 1 detektiert werden.

Der Laserscanner 1 umfasst weiterhin eine Nullpunktdetektionseinheit 11. Die Nullpunktdetektionseinheit 11 weist eine Sendeeinheit 11a und eine Empfangseinheit 11b auf.

Der Laserscanner 1 umfasst außerdem einen stationären Teil 12 und einen gegenüber dem stationären Teil drehbaren Teil 13. Der drehbare Teil 13 ist dazu ausgebildet, um das Lasersignal 6 in unterschiedlichen Winkellagen von dem Laserscanner 1 abzustrahlen. Insbesondere kann das Lasersignal 6 in einem Bereich von 0° bis 360° um den Laserscanner 1 herum abgestrahlt werden. Der drehbare Teil 13 umfasst eine Drehachse 14, um die der drehbare Teil 13 herum drehbar ist. Vorzugsweise wird der drehbare Teil 13 mit einer Frequenz von mehr als 15 Hz, 20 Hz, 23 Hz, 25 Hz, 28 Hz, 30 Hz, 35 Hz oder mehr als 40 Hz gedreht. Weiter vorzugsweise der drehbare Teil 13 mit einer Frequenz von weniger als 45 Hz, 42 Hz, 48 Hz, 33 Hz, 29 Hz, 24 Hz oder weniger als 18 Hz getrennt. Bevorzugt wird der drehbare Teil 13 mit einer Frequenz von 25 Hz (insbesondere ± 5 %) gedreht, was bedeutet, dass der drehbare Teil 13 für eine Umdrehung ca. 40ms benötigt.

Der Laserscanner 1 umfasst eine Antriebseinheit 15, insbesondere in Form eines elektrischen Motors. Die Antriebseinheit 15 ist über eine Welle 16 mit dem drehbaren Teil 13 verbunden. Die Antriebseinheit 15 ist vorzugsweise im stationären Teil 12 angeordnet. Die Welle 16 kann hohl ausgeführt sein, um z.B. die erste Signalübertragungsstrecke 10a durch die hohle Welle 16 zu führen. Die Steuer- und Verarbeitungsvorrichtung 2 ist vorzugsweise dazu ausgebildet, um die Antriebseinheit 15 anzusteuern.

Die Lasermesseinheit 3 ist in diesem Ausführungsbeispiel auf dem drehbaren Teil 13 angeordnet. Durch eine Drehung des drehbaren Teils 13 um die Drehachse 14 um 360° wird das Lasersignal 6 in einer Winkellage von 360 ° um den Laserscanner 1 herum ausgesendet.

Die Nullpunktdetektionseinheit 11 ist dazu ausgebildet, um ein elektromagnetisches Signal 17, insbesondere ein Laserlicht oder einen (Laser-)Lichtimpuls, zu generieren und auszusenden. Dies erfolgt durch die Sendeeinheit 11a. Das elektromagnetische Signal 17 ist gepunktet dargestellt. Das elektromagnetische Signal 17 ist über eine zweite Signalübertragungsstrecke 10b zwischen dem drehbaren Teil 13 und dem stationären Teil 12 übertragbar. Die Nullpunktdetektionseinheit 11 ist dazu ausgebildet, um anhand des übertragenen elektromagnetischen Signals 17 eine Nullpunktlageinformation 18 zu erzeugen, aus der ermittelbar ist, wann sich der drehbare Teil 13 um 360° um seine Drehachse 14 gedreht hat. Die erste Signalübertragungsstrecke 10a und die zweite Signalübertragungsstrecke 10b sind räumlich getrennt zueinander angeordnet. Mit anderen Worten sind die erste Signalübertragungsstrecke 10a und die zweite Signalübertragungsstrecke 10b vollständig überlappungsfrei zueinander angeordnet. Daher legen das Laserlicht 6, welches von der Laserquelle 4 der Lasermesseinheit 3 abgestrahlt, am Objekt 8 reflektiert und vom Laserempfänger 5 der Lasermesseinheit 3 empfangen wird und das elektromagnetische Signal 17, welches von der Sendeeinheit 11a der Nullpunktdetektionseinheit 11 ausgesendet und von der Empfangseinheit 11b der Nullpunktdetektionseinheit 11 empfangen wird, vollständig unterschiedliche Pfade zurück.

Insbesondere verläuft der überwiegende Teil der zweiten Signalübertragungsstrecke 10b, also die überwiegende Länge der zweiten Signalübertragungsstrecke 10b, eher senkrecht als parallel zum überwiegenden Teil der ersten Signalübertragungsstrecke 10a.

In Figur 1 ist die Nullpunktdetektionseinheit 11 dazu ausgebildet, um die Nullpunktlageinformation 18 an die Steuer- und Verarbeitungsvorrichtung 2 zu übertragen. Es ist auch denkbar, dass die Nullpunktlageinformation 18 an einem Ausgangsanschluss (nicht dargestellt) des Laserscanners 1 bereitstellbar ist.

Die Sendeeinheit 11a der Nullpunktdetektionseinheit 11 ist dazu ausgebildet, um das elektromagnetische Signal 17 zu erzeugen und auszusenden, wobei die Empfangseinheit 11b der Nullpunktdetektionseinheit 11 dazu ausgebildet ist, um das elektromagnetische Signal 17 zu empfangen. Dies gilt insbesondere dann, wenn, wie in Figur 1, die Sendeeinheit 11a und die Empfangseinheit 11b in Draufsicht auf den drehbaren Teil 13 zumindest teilweise oder vollständig überlappend zueinander angeordnet sind.

In Figur 1 ist die Sendeeinheit 11a auf dem drehbaren Teil 13 angeordnet und die Empfangseinheit 11b auf dem stationären Teil 12. Der drehbare Teil 13 umfasst eine erste Seite 13a und eine zweite Seite 13b die der ersten Seite 13a gegenüberliegt. Die erste Seite 13a zeigt in Richtung des stationären Teils 12. Die Sendeeinheit 11a ist in diesem Ausführungsbeispiel auf der zweiten Seite 13b angeordnet.

Der drehbare Teil 13 umfasst in diesem Ausführungsbeispiel eine durchgehende Öffnung 19 von der ersten Seite 13a zur zweiten Seite 13b. Die Sendeeinheit 11a, die auf der zweiten Seite 13b des drehbaren Teils 13 angeordnet ist, ist dazu ausgebildet, um das elektromagnetische Signal 17 durch die durchgehende Öffnung 19 in Richtung des stationären Teils 12 und damit in Richtung der Empfangseinheit 11b zu übertragen.

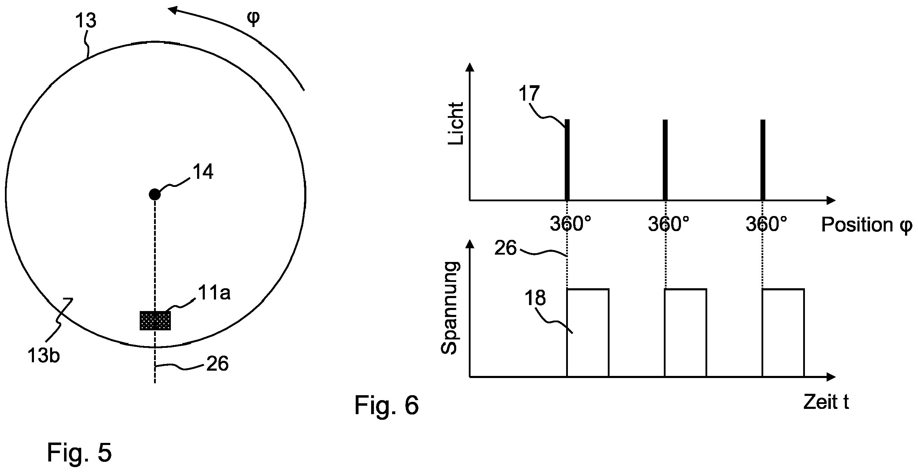

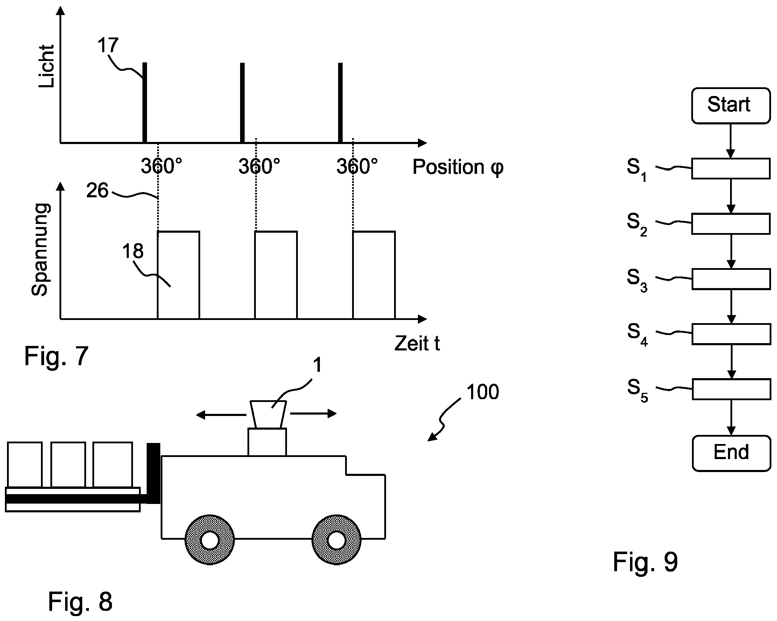

Die Sendeeinheit 11a ist dazu ausgebildet, um vorzugsweise lediglich bei Erreichen einer Nullpunktlage 26 (Figuren 6, 7) das elektromagnetische Signal 17 zu erzeugen und auszusenden. Eine solche Nullpunktlage 26 könnte beispielsweise durch einen mechanischen Kontakt angezeigt werden. Ab einer bestimmten Drehwinkellage kann beispielsweise ein elektrischer Kontakt hergestellt werden, der die Sendeeinheit 11a veranlasst das elektromagnetische Signal 17 zu erzeugen und auszusenden. Es ist auch möglich, dass der Laserscanner 1 eine Winkelmesseinheit (nicht dargestellt) umfasst, wobei die Winkelmesseinheit dazu ausgebildet ist, um die Drehwinkellage des drehbaren Teils 13 festzustellen. Die Winkelmesseinheit ist dann dazu ausgebildet, um eine Winkelinformation an die Nullpunktdetektionseinheit 11 auszugeben. In Abhängigkeit der Winkelinformation ist die Sendeeinheit 11a dazu ausgebildet, um das elektromagnetische Signal 17 zu erzeugen. Es ist auch denkbar, dass die Winkelinformation lediglich dann an die Nullpunktdetektionseinheit 11 übertragen wird, wenn der drehbare Teil 13 die Nullpunktlage 26 erreicht.

Grundsätzlich kann die Sendeeinheit 11a auch dazu ausgebildet sein, um das elektromagnetische Signal 17 zeitlich derart früh auszusenden, dass die Nullpunktlageinformation 18 zumindest zu dem Zeitpunkt an der Steuer- und Verarbeitungseinrichtung 2 und/oder an einem Ausgangsanschluss des Laserscanners 1 eintrifft, an den sich der drehbare Teil 13 um 360° um seine Drehachse 14 gedreht hat. Das elektromagnetische Signal 17 wird daher vor Erreichen der Nullpunktlage 26 erzeugt und ausgesendet.

In Figur 1 ist ebenfalls dargestellt, dass die zweite Signalübertragungsstrecke 10b näher am äußeren Endbereich des drehbaren Teils 13 angeordnet ist als die Drehachse 14 des drehbaren Teils 13.

Die Empfangseinheit 11b der Nullpunktdetektionseinheit 11 ist vorzugsweise auf derjenigen Seite des stationären Teils 12 angeordnet, die unmittelbar an den drehbaren Teil 13 angrenzt, wobei aus dieser Seite vorzugsweise die Welle 16 in Richtung des drehbaren Teils 13 verläuft.

Die Steuer- und Verarbeitungsvorrichtung 2 ist vorzugsweise dazu ausgebildet, um die Messdaten von der Lasermesseinheit 3 zu empfangen und zumindest in Teilen mit der Nullpunktlageinformation 18 zu verknüpfen.

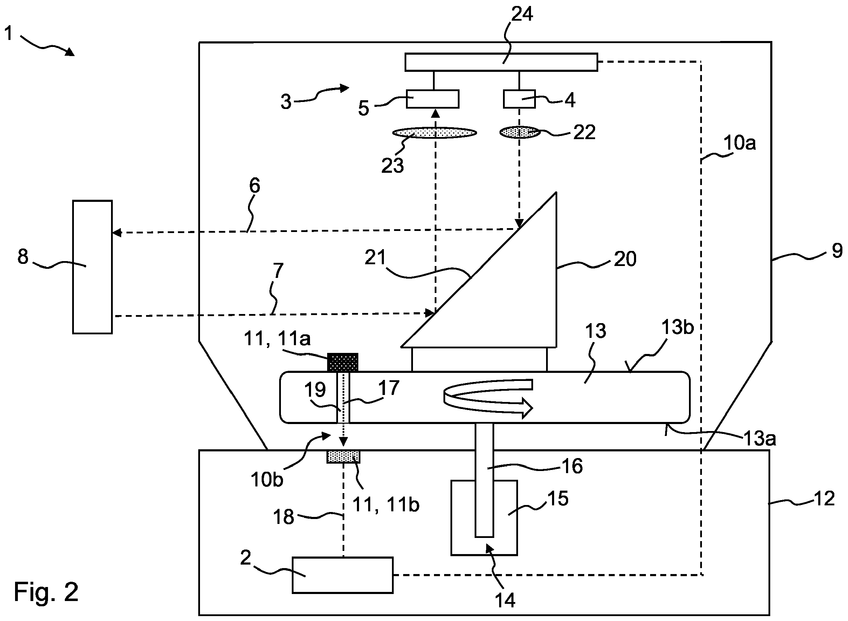

Figur 2 zeigt ein weiteres Ausführungsbeispiel des Laserscanners 1. In diesem Fall ist die Lasermesseinheit 3 auf dem stationären Teil 12 angeordnet und der Laserscanner 1 umfasst eine Ablenkeinheit 20, die auf dem drehbaren Teil 13 angeordnet ist. Die Ablenkeinheit 20 ist dazu ausgebildet, um das Lasersignal 6 in unterschiedlichen Winkellagen abzustrahlen und um das Reflektionssignal 7 an die Lasermesseinheit 3 weiterzuleiten. Die Ablenkeinheit 20 umfasst vorzugsweise einen Ablenkspiegel 21, der dazu ausgebildet ist, um das von der Leserquelle 4 erzeugte Lasersignal 6 zu reflektieren. Die Drehachse 14 des drehbaren Teils 13 verläuft vorzugsweise durch das Zentrum des Ablenkspiegel 21. Die Lasermesseinheit 3 ist vorzugsweise dazu ausgebildet, um das Lasersignal 6 unter einem Winkel von insbesondere 45° auf den Ablenkspiegel 21 auszusenden.

Figur 2 zeigt außerdem einen beispielhaften Aufbau der Lasermesseinheit 3. Die Lasermesseinheit 3 umfasst neben der Laserquelle 4 und dem Laserempfänger 5 (z.B. Fotodiodenanordnung) noch eine erste Optik 22 und eine zweite Optik 23. Die erste Optik 22 ist am Ausgang der Laserquelle 4 angeordnet und ist vorzugsweise dazu ausgebildet, um das Lasersignal 6 zu fokussieren. Die zweite Optik 23 ist am Eingang des Laserempfängers 5 angeordnet und vorzugsweise dazu ausgebildet, um das Reflektionssignal 7 zu fokussieren. Die Lasermesseinheit 3 umfasst vorzugsweise noch eine Prozessoreinheit 24, die dazu ausgebildet ist, um die Laserquelle 4 entsprechend anzusteuern und um Daten von dem Laserempfänger 5 zu empfangen und entsprechende Messdaten daraus zu generieren und diese Messdaten über die erste Signalübertragungsstrecke 10a zu übertragen.

Auch Winkelinformationen von Winkelmesseinheit können von der Prozessoreinheit 24 empfangen und den Messdaten hinzugefügt oder mit den Messdaten verrechnet werden. Vorzugsweise können Steuerbefehle, beispielsweise von der Steuer- und Verarbeitungsvorrichtung 2, von der Prozessoreinheit 24 verarbeitet werden.

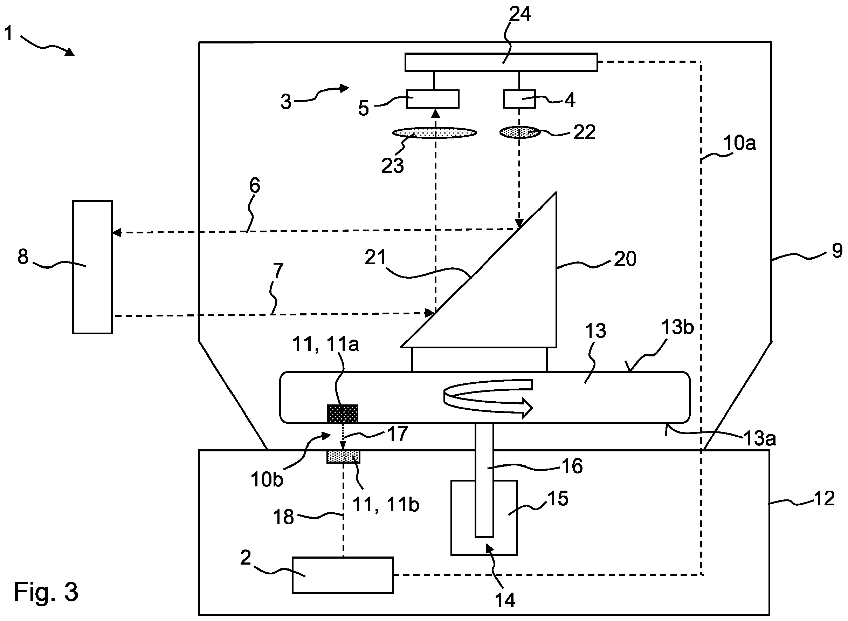

Figur 3 zeigt ein weiteres Ausführungsbeispiel des Laserscanners 1. Im Unterschied zu dem Ausführungsbeispiel aus Figur 2 ist die Sendeeinheit 11a der Nullpunktdetektionseinheit 11 auf der ersten Seite 13a des drehbaren Teils 13 angebracht. Eine durchgehende Öffnung 19, über die das elektromagnetische Signal 17 übertragen wird, ist in diesem Fall nicht mehr notwendig. Die Sendeeinheit 11a kann direkt auf der Oberfläche der ersten Seite 13a angebracht oder in eine entsprechende Vertiefung eingesetzt werden. In diesem Fall würde die Sendeeinheit 11a vorzugsweise bündig mit der ersten Seite 13a abschließen.

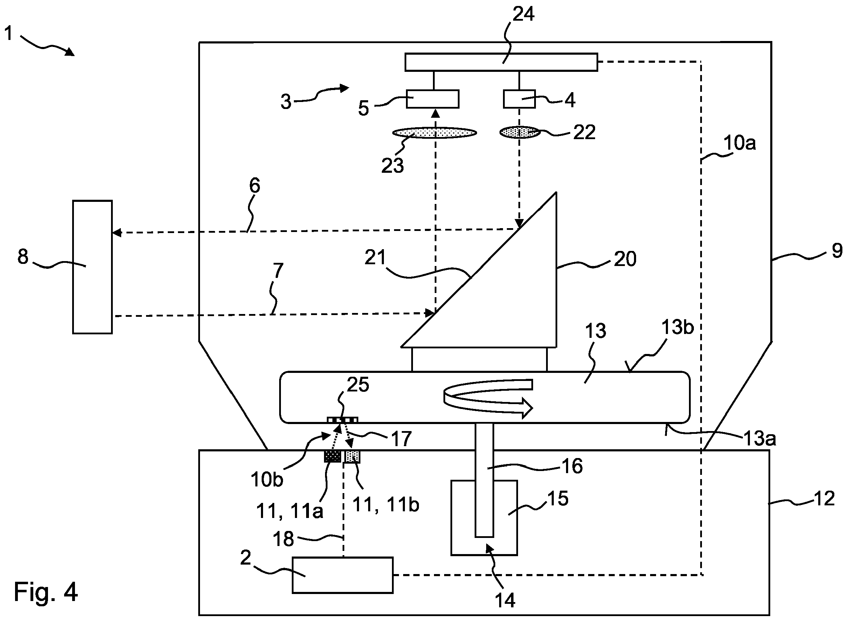

Figur 4 zeigt ein weiteres Ausführungsbeispiel des Laserscanners 1. Im Unterschied zu den Ausführungsbeispielen der Figuren 2 und 3 sind die Sendeeinheit 11a und die Empfangseinheit 11b im stationären Teil 12 angeordnet. Sie sind dabei auf derjenigen Seite des stationären Teils 12 angeordnet, die unmittelbar an den drehbaren Teil 13 angrenzt, wobei aus dieser Seite vorzugsweise die Welle 16 in Richtung des drehbaren Teils 13 verläuft. Der drehbare Teil 13 umfasst in diesem Ausführungsbeispiel eine Markierungsinformation 25. Die Markierungsinformation 25 ist insbesondere an der ersten Seite 13a des drehbaren Teils 13 angebracht. Die Markierungsinformation 25 ist dazu ausgebildet, um das von der Sendeeinheit 11a der Nullpunktdetektionseinheit 11 erzeugte und ausgesendete elektromagnetische Signal 17 gegenüber Bereichen auf derselben Seite, also der ersten Seite 13a, des drehbaren Teils 13 ohne eine solche Markierungsinformation 25 nicht, mit einer anderen Reflektivität oder zeitlich verzögert in Richtung der Empfangseinheit 11b zu reflektieren. Die Markierungsinformation 25 ist insbesondere bzw. lediglich an dem Bereich der ersten Seite 13a angebracht, an welchem der drehbare Teil 13 eine 360° Drehung um seine Drehachse 14 abgeschlossen hat. Vorzugsweise hat die Markierungsinformation 25 eine erhöhte Reflektivität gegenüber den restlichen Bereichen. Das durch die Sendeeinheit 11a erzeugte und ausgesendete elektromagnetische Signal 17 wird daher durch die Empfangseinheit 11b mit einem bestimmten Leistungspegel gemessen, der oberhalb eines Schwellwerts liegt. Dadurch kann die Nullpunktlageinformation 18 erzeugt werden. Nichts anderes würde auch für die klimatische Umkehr gelten, also wenn die restlichen Bereiche eine erhöhte Reflektivität und die Markierungsinformation 25 eine demgegenüber verringerte Reflektivität aufweisen würde. Auch eine entsprechende Einbuchtung, die zu einer zeitlichen Verzögerung beim Empfang des elektromagnetischen Signals 17 führen würde (z.B., wenn die Sendeeinheit 11a gepulst betrieben wird), kann als Markierungsinformation 25 dienen.

Die Markierungsinformation 25 kann auch derart an einer Stelle auf der ersten Seite 13a des drehbaren Teils 13 angebracht sein, dass Verzögerungen bei der Erzeugung der Nullpunktlageinformation 18 mitberücksichtigt werden, sodass die Nullpunktlageinformation 18 insbesondere exakt dann durch die Nullpunktdetektionseinheit 11 ausgegeben wird, wenn der drehende Teil 13 eine 360° Drehung um seine Drehachse 14 abgeschlossen hat.

Figur 5 zeigt eine Draufsicht auf ein Ausführungsbeispiel des drehbaren Teils 13 auf dessen zweite Seite 13b. Neben der Drehachse 14 ist noch die Sendeeinheit 11a der Nullpunktdetektionseinheit 11 dargestellt. Die Sendeeinheit 11a ist näher am äußeren Randbereich des drehbaren Teils 13 angeordnet als an der Drehachse 14. Der drehbare Teil 13 umfasst in diesem Ausführungsbeispiel einen runden Querschnitt oder einen im wesentlichen runden Querschnitt. Allerdings sind auch Querschnittsformen, die von einem runden Querschnitt abweichen, denkbar. Eingezeichnet ist ebenfalls die Nullpunktlage 26 des drehbaren Teil 13, aber deren Erreichen durch das drehbare Teil 13 die Sendeeinheit 11a das elektromagnetische Signal 17 erzeugt.

Figur 6 zeigt ein Ausführungsbeispiel, welches erläutert, wie aus dem elektromagnetischen Signal 17 die Nullpunktlageinformation 18 erzeugt wird. Dargestellt ist, dass die Sendeeinheit 11a der Nullpunktdetektionseinheit 11 bei jeder Umdrehung des drehbaren Teils 13 um seine Drehachse 14, also bei einer Umdrehung um 360°, ein elektromagnetisches Signal 17 für eine bestimmte Zeitdauer erzeugt. Dieses elektromagnetische Signal 17 wird ausgesendet und über die zweite Signalübertragungsstrecke 10b hin zur Empfangseinheit 11b der Nullpunktdetektionseinheit 11 übertragen. Die Empfangseinheit 11b ist dazu ausgebildet, um ein solches elektromagnetisches Signal 17 in ein elektrisches Signal umzusetzen, welches von einer nachfolgenden Verarbeitungseinheit, beispielsweise von der Steuer- und Verarbeitungsvorrichtung 2, weiterverarbeitet werden kann. Das elektrische Signal kann beispielsweise die Nullpunktlageinformation 18 darstellen oder beinhalten. Das elektrische Signal umfasst daher entsprechende Pegel, deren Höhe derart gewählt ist, dass diese zu den Logikpegeln der nachfolgenden Verarbeitungseinheit korrespondieren. Grundsätzlich kann noch eine Pegelanpassungsvorrichtung vorgesehen sein, um das elektrische Signal am Ausgang der Empfangseinheit 11b auf einen bestimmten Pegel zu heben. Dargestellt ist, dass die Empfangseinheit 11b jedes Mal, wenn ein elektromagnetisches Signal 17 durch die Sendeeinheit 11a ausgesendet wird, ein entsprechendes elektrisches Signal mit einem bestimmten Pegel erzeugt.

Figur 7 zeigt ein weiteres Ausführungsbeispiel, welches erläutert, wie aus dem elektromagnetischen Signal 17 die Nullpunktlageinformation 18 erzeugt wird. Im Unterschied zu Figur 6 ist die Sendeeinheit 11a dazu ausgebildet, um das elektromagnetische Signal 17 zu erzeugen und auszusenden und zwar bevor der drehbare Teil 13 seine Nullpunktlage 26 (eine Drehung um 360°) erreicht hat. Aufgrund von Verzögerungen in der zweiten Signalübertragungsstrecke 10b, der Empfangseinheit 11b und gegebenenfalls einer nachfolgenden Pegelanpassungsvorrichtung, liegt das durch die Empfangseinheit 11b erzeugte elektrische Signal, bei welchem es sich um die Nullpunktlageinformation 18 handeln kann, insbesondere exakt mit Erreichen der Nullpunktlage 26 des drehbaren Teils 13 an einer weiteren Verarbeitungseinheit, wie beispielsweise der Steuer- und Verarbeitungsvorrichtung 2, an.

Bevorzugt ist der Jitter bei Übertragung der Nullpunktlageinformation 18 über die zweite Signalübertragungsstrecke 10b geringer als der Jitter bei Übertragung der Messdaten über die erste Signalübertragungsstrecke 10a.

Figur 8 zeigt ein Ausführungsbeispiel eines autonom fahrenden Fahrzeugs 100, in Form eines Staplers, welches den erfindungsgemäßen Laserscanner 1 umfasst.

Figur 9 zeigt ein Flussdiagramm, welches ein Verfahren zum Betrieb des erfindungsgemäßen Laserscanners 1 beschreibt. In einem ersten Verfahrensschritt S₁ erfolgt ein fortlaufendes Drehen des drehbaren Teils 13 um die Drehachse 14. Diese Drehung erfolgt immer in dieselbe Drehrichtung, wobei die Drehgeschwindigkeit vorzugsweise konstant ist. In einem zweiten Verfahrensschritt S₂ wird das Lasersignal 6 vom drehbaren Teil 13 je nach aktuellem Drehwinkel fortlaufend in unterschiedlichen Winkellagen ausgesendet und ein Reflektionssignal 7 empfangen, um anhand des Reflektionssignals 7 fortlaufend Messdaten zu generieren. In einem dritten Verfahrensschritt S₃ werden diese Messdaten fortlaufend über die erste Signalübertragungsstrecke 10a, insbesondere zu der Steuer- und Verarbeitungsvorrichtung 2, übertragen. In einem vierten Verfahrensschritt S₄ wird das elektromagnetisches Signal 17 erzeugt und zwischen dem drehbaren Teil 13 und dem stationären Teil 12 über die zweite Signalübertragungsstrecke 10b übertragen, wobei die zweite Signalübertragungsstrecke 10b räumlich von der ersten Signalübertragungsstrecke 10a getrennt ist. In einem fünften Verfahrensschritt S₅ wird die Nullpunktlageinformation 18 anhand des übertragenen elektromagnetischen Signals 17 erzeugt, wobei aus dieser Nullpunktlageinformation 18 ermittelbar ist, wann sich der drehbare Teil 13 um 360° um seine Drehachse 14 gedreht hat.

Die Erfindung ist nicht auf die beschriebenen Ausführungsbeispiele beschränkt. Im Rahmen der Erfindung sind alle beschriebenen und/oder gezeichneten Merkmale beliebig miteinander kombinierbar.

### Bezugszeichenliste

| | |
|---|---|
| Laserscanner | 1 |
| Steuer- und Verarbeitungsvorrichtung | 2 |
| Lasermesseinheit | 3 |
| Laserquelle | 4 |
| Laserempfänger | 5 |
| Lasersignal | 6 |
| Reflektionssignal | 7 |
| Objekt | 8 |
| Gehäuse | 9 |
| Erste Signalübertragungsstrecke | 10a |
| Zweite Signalübertragungsstrecke | 10b |
| Nullpunktdetektionseinheit | 11 |
| Sendeeinheit | 11a |
| Empfangseinheit | 11b |
| Stationären Teil | 12 |
| Drehbarer Teil | 13 |
| Erste Seite | 13a |
| Zweite Seite | 13b |
| Drehachse | 14 |
| Antriebseinheit | 15 |
| Welle | 16 |
| Elektromagnetisches Signal | 17 |
| Nullpunktlageinformation | 18 |
| Durchgehende Öffnung | 19 |
| Ablenkeinheit | 20 |
| Ablenkspiegel | 21 |
| Erste Optik | 22 |
| Zweite Optik | 23 |
| Prozessoreinheit | 24 |
| Markierungsinformation | 25 |
| Nullpunktlage | 26 |
| Autonom fahrendes Fahrzeug | 100 |
| Verfahrensschritte | S₁, S₂, S₃, S₄, S₅ |

## Patentansprüche

1. Laserscanner (1) zur Überwachung eines Raumbereichs, wobei der Laserscanner (1) eine Steuer- und Verarbeitungsvorrichtung (2), eine Lasermesseinheit (3), eine Nullpunktdetektionseinheit (11), einen stationären Teil (12) und einen gegenüber dem stationären Teil (12) drehbaren Teil (13) umfasst, wobei die Lasermesseinheit (3) dazu ausgebildet ist, um ein Lasersignal (6) zur Detektion eines Objekts (8) zu erzeugen und ein Reflektionssignal (7) von dem Objekt (8) zu empfangen um daraus Messdaten zu generieren, wobei der drehbare Teil (13) dazu ausgebildet ist, damit das Lasersignal (6) in unterschiedlichen Winkellagen von dem Laserscanner (1) abstrahlbar ist, wobei die Messdaten über eine erste Signalübertragungsstrecke (10a) insbesondere zu der Steuer- und Verarbeitungsvorrichtung (2) übertragbar sind und wobei die Nullpunktdetektionseinheit (11) dazu ausgebildet ist, um ein elektromagnetisches Signal (17) zu erzeugen und über eine zweite Signalübertragungsstrecke (10b) zwischen dem sich drehbaren Teil (13) und dem stationären Teil (12) zu übertragen, wobei die Nullpunktdetektionseinheit (11) dazu ausgebildet ist, um anhand des übertragenen elektromagnetischen Signals (17) eine Nullpunktlageinformation (18) zu erzeugen, aus der ermittelbar ist, wann sich der drehbare Teil (13) um 360° um seine Drehachse (14) gedreht hat und wobei die erste Signalübertragungsstrecke (10a) und die zweite Signalübertragungsstrecke (10b) räumlich voneinander beabstandet sind.

2. Laserscanner (1) nach Anspruch 1,
wobei die Nullpunktdetektionseinheit (11) dazu ausgebildet ist, um die Nullpunktlageinformation (18):
a) an die Steuer- und Verarbeitungsvorrichtung (2) zu übertragen; und/oder
b) an einem Ausgangsanschluss des Laserscanners (1) bereitzustellen.

3. Laserscanner (1) nach Anspruch 1 oder 2,
wobei das elektromagnetische Signal (17) ein Laserlicht oder ein Lichtimpuls ist.

4. Laserscanner (1) nach einem der vorstehenden Ansprüche,
wobei die Nullpunktdetektionseinheit (11) eine Sendeeinheit (11a) und eine Empfangseinheit (11b) umfasst, wobei die Sendeeinheit (11a) dazu ausgebildet ist, um das elektromagnetische Signal (17) zu erzeugen und auszusenden und wobei die Empfangseinheit (11b) dazu ausgebildet ist, um das elektromagnetische Signal (17) zu empfangen.

5. Laserscanner (1) nach Anspruch 4,
wobei die Sendeeinheit (11a) auf dem drehbaren Teil (13) angeordnet ist und wobei die Empfangseinheit (11b) auf dem stationären Teil (12) angeordnet ist.

6. Laserscanner (1) nach Anspruch 4 oder 5,
wobei der drehbare Teil (13) eine erste Seite (13a) und eine zweite Seite (13b) umfasst, wobei die erste Seite (13a) gegenüber der zweiten Seite (13b) liegt und wobei die erste Seite (13a) in Richtung des stationären Teils (12) zeigt und wobei die Sendeeinheit (11a) auf der ersten Seite (13a) oder auf der zweiten Seite (13b) angeordnet ist.

7. Laserscanner (1) nach Anspruch 6,
wobei der drehbare Teil (13) eine durchgehende Öffnung (19) umfasst und wobei die Sendeeinheit (11a) auf der zweiten Seite (13b) des drehbaren Teils (13) angeordnet und dazu ausgebildet ist, um das elektromagnetische Signal (17) durch die durchgehende Öffnung (19) in Richtung des stationären Teils (12) zu übertragen.

8. Laserscanner (1) nach einem der Ansprüche 5 bis 7,
wobei die Sendeeinheit (11a) und die Empfangseinheit (11b) zur Übertragung des elektromagnetischen Signals (17) bei Erreichen einer Nullpunktlage (26) in Draufsicht auf den drehbaren Teil (13) zumindest teilweise oder vollständige überlappend zueinander angeordnet sind.

9. Laserscanner (1) nach einem der Ansprüche 5 bis 8,
wobei der Laserscanner (1) eine Winkelmesseinheit umfasst, wobei die Nullpunktdetektionseinheit (11) dazu ausgebildet ist, um eine Winkelinformation von der Winkelmesseinheit zu empfangen und wobei die Sendeeinheit (11 a) nach Empfang dieser Winkelinformation dazu ausgebildet ist, das elektromagnetische Signal (17) zu erzeugen.

10. Laserscanner (1) nach einem der Ansprüche 5 bis 9,
wobei die Sendeeinheit (11a) dazu ausgebildet ist, um das elektromagnetische Signal (17) zeitlich derart früh auszusenden, dass die Nullpunktlageinformation (18) zumindest zu dem Zeitpunkt an der Steuer- und Verarbeitungsvorrichtung (2) und/oder an einem Ausgangsanschluss des Laserscanners (1) eintrifft, an dem sich der drehbare Teil (13) gerade um 360° um seine Drehachse (14) gedreht hat.

11. Laserscanner (1) nach Anspruch 4,
wobei die Sendeeinheit (11a) und die Empfangseinheit (11b) im stationären Teil (12) angeordnet sind, wobei der sich drehbare Teil (13) eine erste Seite (13a) umfasst, wobei die erste Seite (13a) in Richtung des stationären Teils (12) zeigt und wobei die erste Seite (13a) an dem Bereich, an welchem der sich drehbare Teil (13) eine 360° Drehung um seine Drehachse (14) abgeschlossen hat, eine Markierungsinformation (25) enthält, die dazu ausgebildet ist, das von der Sendeeinheit (11a) erzeugte und ausgesendete elektromagnetische Signal (17) gegenüber Bereichen auf der ersten Seite (13a) ohne eine solche Markierungsinformation (25):
a) nicht;
b) mit einer anderen Reflektivität; oder
c) zeitlich verzögert;
in Richtung der Empfangseinheit (11b) zu reflektieren.

12. Laserscanner (1) nach einem der vorgehenden Ansprüche,
wobei die Steuer- und Verarbeitungsvorrichtung (2) dazu ausgebildet ist, um die Messdaten mittelbar oder unmittelbar von der Lasermesseinheit (3) zu empfangen und zumindest in Teilen mit der Nullpunktlageinformation (18) zu verknüpfen.

13. Laserscanner (1) nach einem der vorgehenden Ansprüche,
wobei die Lasermesseinheit (3):
a) auf dem stationären Teil (12) angeordnet ist und wobei eine Ablenkeinheit (20) auf dem drehbaren Teil (13) angeordnet und dazu ausgebildet ist, um das Lasersignal (6) in die unterschiedlichen Winkellagen abzustrahlen und um das Reflektionssignal (7) an die Lasermesseinheit (3) weiterzuleiten; oder
b) auf drehbaren Teil (13) angeordnet ist.

14. Laserscanner (1) nach einem der vorgehenden Ansprüche,
wobei die zweite Signalübertragungsstrecke (10b) näher am äußeren Endbereich des drehbaren Teils (13) angeordnet ist als an der Drehachse (14) des drehbaren Teils (13).

15. Verfahren zum Betrieb eines Laserscanners (1), der eine Steuer- und Verarbeitungsvorrichtung (2), eine Lasermesseinheit (3), eine Nullpunktdetektionseinheit (11), einen stationären Teil (12) und einen sich gegenüber dem stationären Teil drehbaren Teil (13) umfasst, mit den folgenden Verfahrensschritten:
- Fortlaufendes Drehen (S₁) des drehbaren Teils (13) um eine Drehachse (14);
- Aussenden (S₂) eines Lasersignals (6) vom drehbaren Teil (13) je nach Drehwinkel in unterschiedlichen Winkellagen und empfangen eines Reflektionssignals (7) und Generierung von Messdaten;
- Übertragen (S₃) der Messdaten über eine erste Signalübertragungsstrecke (10a) insbesondere zu der Steuer- und Verarbeitungsvorrichtung (2);
- Erzeugen (S₄) eines elektromagnetischen Signals (17) und Übertragen des elektromagnetischen Signals (17) zwischen dem drehbaren Teil (13) und dem stationären Teil (12) über eine zweite Signalübertragungsstrecke (10b), die räumlich von der ersten Signalübertragungsstrecke (10a) getrennt ist;
- Erzeugen (S₅) einer Nullpunktlageinformation (18) anhand des elektromagnetischen Signals (17), aus der ermittelbar ist, wann sich der drehbare Teil (13) um 360° um seine Drehachse (14) gedreht hat.
